# EUROPÄISCHE PATENTSCHRIFT

(11) **EP 2 865 905 B1**
(45) Veröffentlichungstag und Bekanntmachung des Hinweises auf die Patenterteilung: **16.11.2016**
(21) Anmeldenummer: 14186378.7
(22) Anmeldetag: 25.09.2014
(51) Int. Cl.: F16C 3/035, F16C 29/04

(54) **Teleskopführung und Verfahren zu deren Montage**
Telescopic guide and method of assembling the same
Glissière télescopique et son procédé de montage

(30) Priorität: 25.09.2013 DE 102013219296
(43) Veröffentlichungstag der Anmeldung: 29.04.2015
(73) Patentinhaber: Aktiebolaget SKF, 415 50 Göteborg (SE)
(72) Erfinder: Andersson, Leif, 97711 Maßbach (DE)
(74) Vertreter: Kuhstrebe, Jochen

(56) Entgegenhaltungen:
- EP-A2- 0 258 846
- DE-A1- 19 623 437
- DE-C- 863 733
- DE-U- 1 919 240
- DE-U1- 8 708 202

## Beschreibung

Die Erfindung betrifft eine Teleskopführung, umfassend mindestens zwei im Querschnitt quadratisch oder rechteckig ausgebildete und teleskopartig zusammenwirkende Rohrelemente, die relativ zueinander in eine translatorische Verschieberichtung verschieblich angeordnet sind, wobei zwischen den Rohrelementen Linearlagerelemente angeordnet sind, wobei jedes Rohrelement aus vier Plattenelementen besteht, die an ihren zusammenstoßenden Eckbereichen mittels je eines Eckverbindungselements verbunden sind. Des weiteren betrifft die Erfindung ein Verfahren zur Montage einer solchen Teleskopführung.

Im Stand der Technik sind Teleskopführungen bekannt, die als Hubsäulen ausgebildet meist mit Gleitelementen versehen sind. Nachteilig ist hier die Begrenzung der Tragfähigkeit aufgrund der gegebenen Reibung. Teleskopführungen können ebenfalls mit Wälzführungen verwirklicht werden.

Gattungsgemäße Teleskopführungen werden dabei zumeist hergestellt, indem ein größeres und ein kleineres rechteckiges oder quadratische Profil bereitgestellt werden. In den Raum in den Eckbereichen der teleskopartig zusammengeschobenen beiden Profile werden dann Linearführungen montiert. Dabei müssen, um eine hinreichend hohe Präzision der Führung zu erzielen, die Profile genauso wie die Linearführungen mit hoher Präzision gefertigt werden, um im zusammengebauten Zustand einen guten Lauf bei der relativen Linearverschiebung zu erreichen. Dementsprechend sind die Kosten für die Herstellung einer stark belastbaren und präzisen Teleskopführung relativ hoch.

Eine gattungsgemäße Teleskopführung ist aus der DE 87 08 202 U1 bekannt. Ähnliche und andere Lösungen zeigen die EP 0 258 846 A2, die DE 863 733 C, die DE 19 19 240 U und die DE 196 23 437 A1.

Der Erfindung liegt daher die Aufgabe zugrunde, eine Teleskopführung der eingangs genannten Art bereitzustellen, bei der auf Bauteile zurückgegriffen werden kann, die in einfacher und kostengünstiger Weise hergestellt sind. Dennoch soll erreicht werden, dass die Teleskopführung einen hohen Grad an Stabilität und an Präzision der Führung aufweist.

Die Lösung dieser Aufgabe durch die Erfindung ist dadurch gekennzeichnet, dass die Verbindung zwischen den Plattenelementen und den Eckverbindungselementen eine stoffschlüssige Verbindung ist, wobei die Linearlagerelemente Wälzkörper umfassen, die als Kreuzrollenkäfige oder Kugelkäfige ausgebildet sind, wobei zwischen den Wälzkörpern und den Eckverbindungselementen eine Stahlprofilschiene angeordnet ist, die eine Anlauffläche für die Wälzkörper bildet und die L-förmig ausgebildet ist und in einer kongruenten Ausformung des Eckverbindungselements angeordnet ist, wobei das Eckverbindungselement eine außenliegende und eine innenliegende Ausformung für je eine Stahlprofilschiene aufweist und wobei das Eckverbindungselement im Bereich der Ausformung Vorsprünge zur Halterung der Stahlprofilschiene aufweist. Dadurch wird die Anbringung der Stahlprofilschiene am Eckverbindungselement erleichtert.

Die Plattenelemente sind dabei bevorzugt mit den Eckverbindungselementen verklebt.

Die Eckverbindungselemente weisen bevorzugt zwei schlitzförmige Aufnahmen für die Aufnahme der seitlichen Endbereiche zweier Plattenelemente auf. Dabei sind die beiden schlitzförmigen Aufnahmen um 90° zueinander versetzt angeordnet.

Die Eckverbindungselemente bestehen bevorzugt aus einem abgelängten Profilteil, insbesondere aus einem gezogenen Metallprofil. Hierbei ist insbesondere an ein Aluminiumprofil gedacht.

Das Verfahren zur Montage der genannten Teleskopführung weist die Schritte auf:
a) Bereitstellen einer zentral angeordneten im Querschnitt quadratischen oder rechteckförmigen Masterschiene, die sich in Verschieberichtung erstreckt und in ihren vier Eckbereichen Anlageflächen für je ein Eckverbindungselement aufweist;
b) Ansetzen von vier Eckverbindungselementen an den Anlageflächen der Masterschiene, wobei jedes Eckverbindungselement mit zwei Plattenelementen verbunden wird, indem die Plattenelemente in je eine schlitzförmige Aufnahme des Eckverbindungselements eingesteckt werden, wobei ein Klebstoff in den Bereich zwischen das Eckverbindungselement und das Plattenelement eingebracht wird;
c) Ansetzen von vier Linearlagerelementen an die Außenseite der vier Eckverbindungselemente;
d) Ansetzen weiterer vier Eckverbindungselemente an die vier Linearlagerelemente, wobei jedes Eckverbindungselement mit zwei Plattenelementen verbunden wird, indem die Plattenelemente in je eine schlitzförmige Aufnahme des Eckverbindungselements eingesteckt werden, wobei ein Klebstoff in den Bereich zwischen das Eckverbindungselement und das Plattenelement eingebracht wird;
e) Aushärtenlassen des Klebstoffs, wobei während des Aushärtens auf die außenliegenden Eckverbindungselemente eine zum Zentrum der Masterschiene hin gerichtete Andruckkraft aufrecht erhalten wird.

Auf diese Art und Weise können dann auch mehr als zwei rohrförmige Teleskopelemente hergestellt bzw. montiert werden, die quasi schalenartig von innen nach außen aufgebaut werden.

Eine erfindungsgemäße Teleskopführung zeichnet sich durch eine hohe Belastbarkeit sowie durch eine hohe Präzision der Führung aus. Dabei können Bauteile verwendet werden, die nicht mit übermäßig hoher Präzision hergestellt werden müssen. Vielmehr ergibt sich durch den strukturellen Aufbau der Teleskopführung und die beschriebene Montageweise die Möglichkeit, eine hohe Präzision der Relativposition der einzelnen Teile durch den Montagevorgang herzustellen. Die notwendige Genauigkeit wird also bei der Montage erzeugt und nicht bei der Vorfertigung der Einzelteile, die durchaus mit relativ hohen Fertigungstoleranzen vorliegen können.

Es können weitgehend unbearbeitete Aluminiumprofile und Standard-Linearführungen zum Einsatz kommen.

Das vorgeschlagene Montageverfahren ermöglicht es, mehrstufige Teleskopführungen in einfacher Weise herzustellen, bei der also mehrere unterschiedliche große Rohre teleskopartig zusammenwirken.

Die benötigten Einzelteile können mit relativ großen Fertigungstoleranzen produziert werden. Durch den bevorzugten Klebevorgang beim Zusammenbau der Teleskopführung werden gegebenenfalls vorhandene Toleranzen eliminiert. Zudem kann auf Standard-Bauteile zurückgegriffen werden, die teils als Normteile oder als übliche Profile zur Verfügung stehen.

Die entstehende Teleskopführung kann hohe Lasten sowie Momente aufnehmen, wobei eine nur sehr geringe Reibung vorliegt, wenn Wälzkörper in den Linearführungen benutzt werden. Das Verhältnis zwischen Einbaulänge und realisierbarem Hub kann optimiert werden.

Vorliegend ist von einer Ausbildung der Rohrelemente als quadratische oder rechteckförmige Bauelemente die Rede. Natürlich lässt sich das vorgeschlagene erfindungsgemäße Prinzip genauso auf Teleskopführungen anwenden, die mehreckige polygonale Rohrelemente aufweisen, also beispielsweise dreieckige, fünfeckige oder sechseckige Rohrelemente.

In der Zeichnung ist ein Ausführungsbeispiel der Erfindung dargestellt. Es zeigen:
- Fig. 1: eine fertig montierte Teleskopführung, gesehen in Richtung der translatorischen Verschieberichtung,
- Fig. 2: in perspektivischer Darstellung ein Eckverbindungselement, das in der Teleskopführung zum Einsatz kommt,
- Fig. 3: in perspektivischer Darstellung eine Stahlprofilschiene,
- Fig. 4: in perspektivischer Darstellung das Eckverbindungselement gemäß Fig. 2, wobei jetzt zwei Stahlprofilschienen an diesem montiert sind,
- Fig. 5: in perspektivischer Darstellung ein Plattenelement,
- Fig. 6: in perspektivischer Darstellung das Eckverbindungselement mit den beiden Stahlprofilschienen gemäß Fig. 4, wobei jetzt zwei Plattenelemente gemäß Fig. 5 mit dem Eckverbindungselement verbunden sind,
- Fig. 7: in perspektivischer Darstellung ein Linearlagerelement in Form eines Kreuzrollenkäfigs,
- Fig. 8: in perspektivischer Darstellung eine Masterschiene für die Montage der Teleskopführung und
- Fig. 9: die Teleskopführung während des Montagevorgangs, gesehen in Richtung der translatorischen Verschieberichtung.

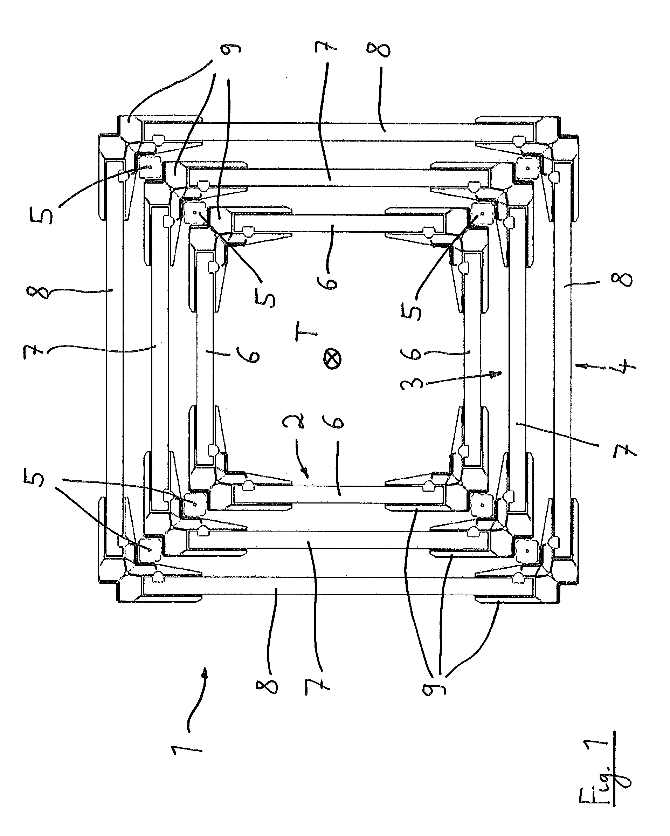

In Fig. 1 ist eine Teleskopführung 1 dargestellt, betrachtet in translatorische Verschieberichtung T, die senkrecht auf der Zeichenebene steht. Die Teleskopführung 1 umfasst drei Rohrelemente 2, 3 und 4 mit jeweils quadratischem Querschnitt.

Jedes Rohrelement 2, 3, 4 ist aus vier Eckverbindungselementen 9 aufgebaut, zwischen denen vier Plattenelemente 6, 7 bzw. 8 angeordnet sind, um die im Querschnitt quadratische Struktur zu bilden. In den sich ergebenden vier Eckbereichen zwischen dem innersten Rohrelement 2 und dem mittleren Rohrelement 3 sind vier Linearlagerelemente 5 angeordnet, die es erlauben, dass sich eine relative Verschiebung in translatorische Verschieberichtung T zwischen den beiden Rohrelementen 2 und 3 ergibt.

Entsprechend sind auch in den vier Eckbereichen zwischen dem mittleren Rohrelement 3 und dem äußeren Rohrelement 4 vier Linearlagerelemente 5 angeordnet, die es wiederum erlauben, dass sich eine relative Verschiebung zwischen den beiden Rohrelementen 3 und 4 ergibt.

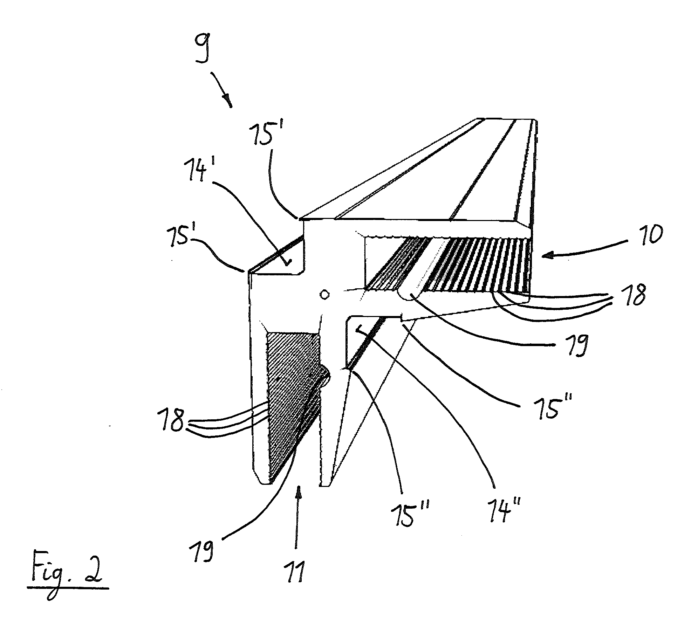

Die Details des Aufbaus gehen aus den Figuren 2 bis 7 hervor.

Hiernach ist zunächst in Fig. 2 zu sehen, dass das zum Einsatz kommende Eckverbindungselement 9 ein gezogenes Aluminiumprofil ist, das auf die benötigte Länge abgelängt ist; der Profilquerschnitt geht aus Fig. 2 hervor. Hiernach weist das Eckverbindungselement 9 zwei schlitzförmige Aufnahmen 10 und 11 auf. Diese Aufnahmen 10, 11 haben längsverlaufende Rillen 18, damit ein eingeschobenes Plattenelement 6, 7 bzw. 8 besseren mechanischen Halt findet, wenn es mit seinem seitlichen Bereich in die Aufnahme 10, 11 eingeschoben ist.

Weiterhin ist eine Längsnut 19 vorgesehen, die ein Aufnahmereservoir für Klebstoff bildet, mit dem das Plattenelement 6, 7, 8 mit dem Eckverbindungselement 9 verklebt wird.

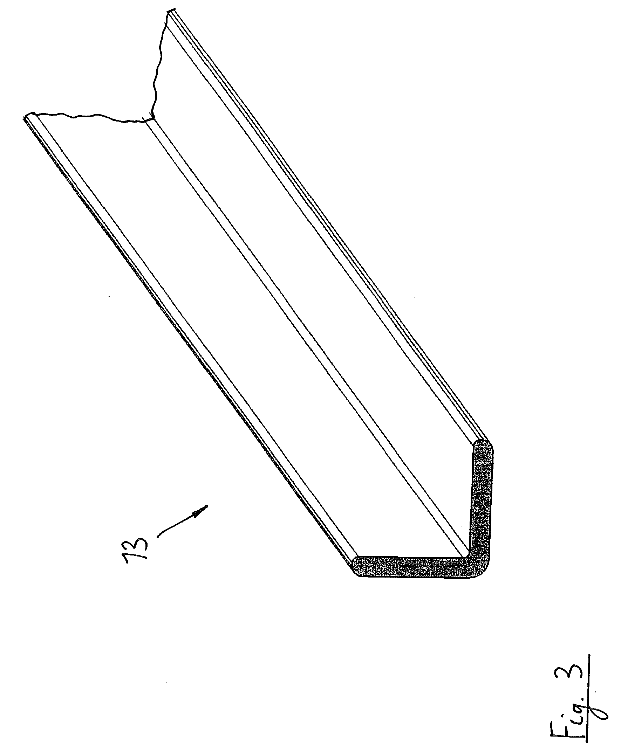

Weiterhin weist das Eckverbindungselement 9 eine äußere Ausformung 14' und eine innere Ausformung 14" auf, die zur Aufnahme einer Stahlprofilschiene 13 (s. Fig. 3) vorgesehen ist. Die beiden rechtwinkelig zueinander ausgerichteten Flächen der Ausformung 14' bzw. 14" werden jeweils durch zwei Vorsprünge 15' bzw. 15" begrenzt, was es ermöglicht, dass die in Fig. 3 dargestellte Stahlprofilschiene 13 in translatorische Verschieberichtung T in die Ausformung 14' bzw. 14" eingeschoben werden kann, um dann aufgrund der Vorsprünge 15', 15" formschlüssig Halt zu finden.

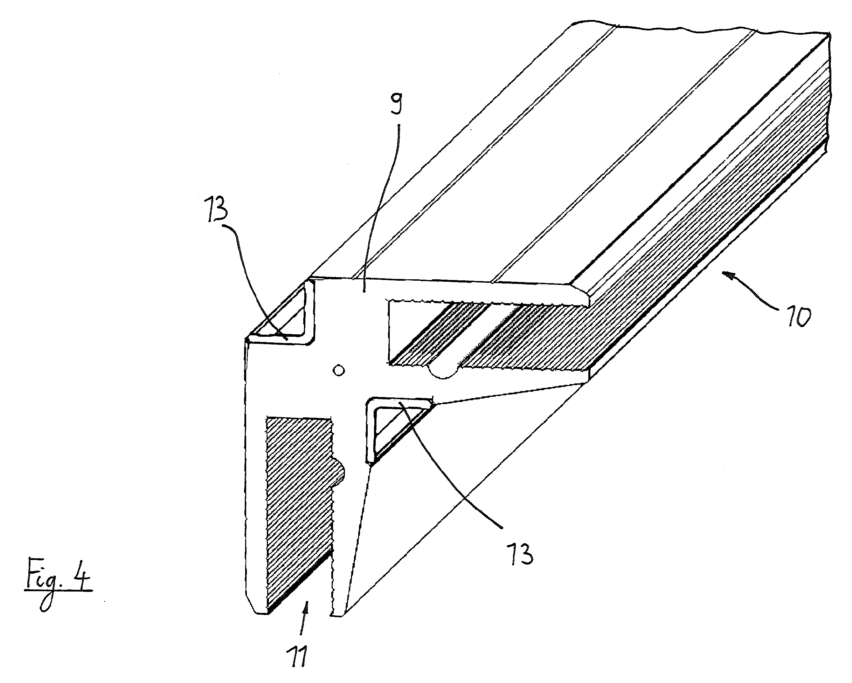

Die insoweit vormontierte Einheit, bestehend aus dem Eckverbindungselement 9 und den beiden Stahlprofilschienen 13, ist in Fig. 4 zu sehen.

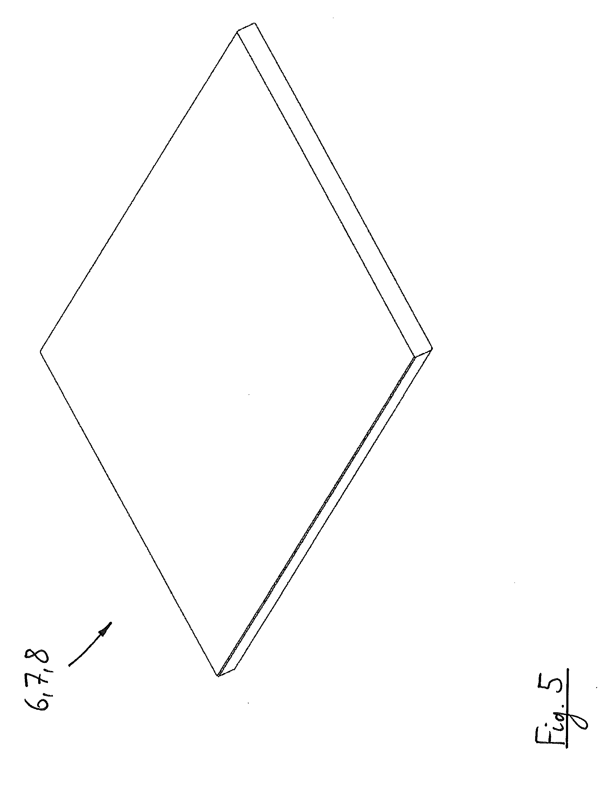

Die in die schlitzförmigen Aufnahmen 10, 11 des Eckverbindungselements 9 einzuschiebenden Plattenelemente 6, 7, 8 sind in Fig. 5 zu sehen.

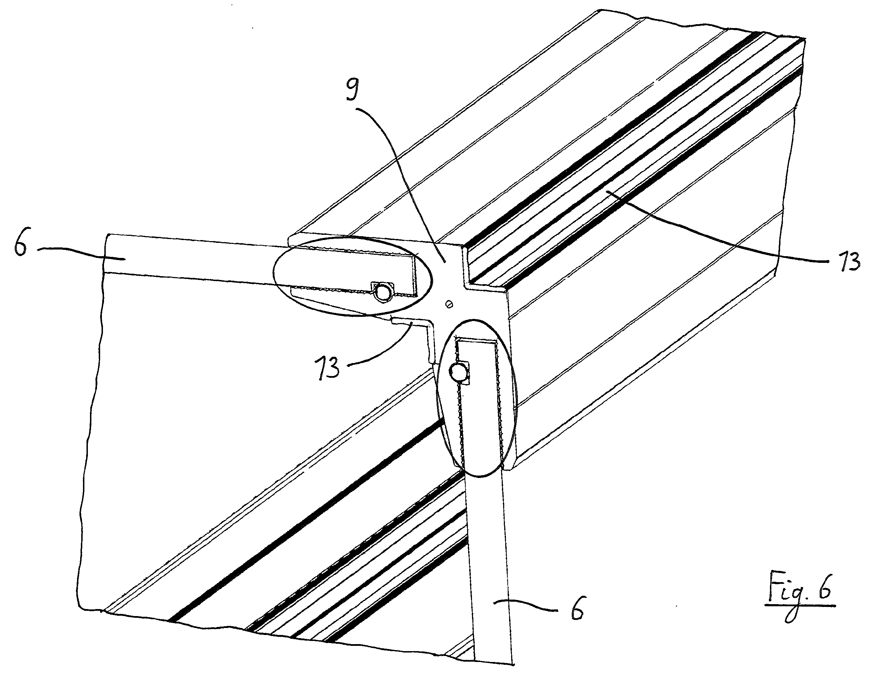

In Fig. 6 kann gesehen werden, wie besagte Plattenelemente 6, 7, 8 in die schlitzförmigen Aufnahmen des Eckverbindungselements 9 eingeschoben wurden. Dabei wurde vorher

Klebstoff in die Aufnahmen 10, 11 eingebracht, so dass sich an den beiden mit ovalen Markierungen versehenen Stellen ein Klebeverbund zwischen den Plattenelementen 6, 7, 8 und dem Eckverbindungselement 9 ergibt.

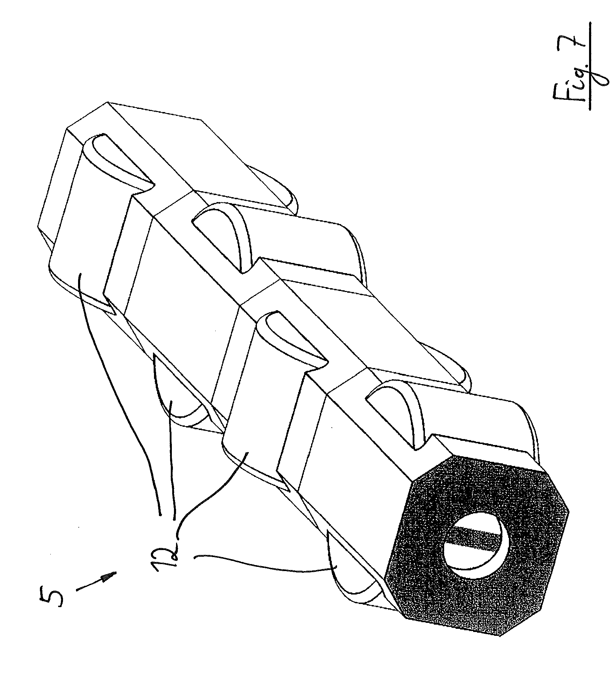

Ein Beispiel für das Linearlagerelement 5, das in den vier Eckbereichen zwischen die Rohrelemente 2 und 3 bzw. 3 und 4 eingebracht wird, ist in Fig. 7 dargestellt. Hier ist ein Kreuzrollenkäfig zu sehen, der hier als eine bevorzugte Lösung vorgesehen ist. Genauso können natürlich auch andere Lagertypen eingesetzt werden, z. B. ein Kugelkäfig. In jedem Falle werden vorliegend Wälzkörper 12 in Position gehalten, um eine reibungsarme Verschiebung zwischen den Rohrelementen 2, 3, 4 zu gewährleisten.

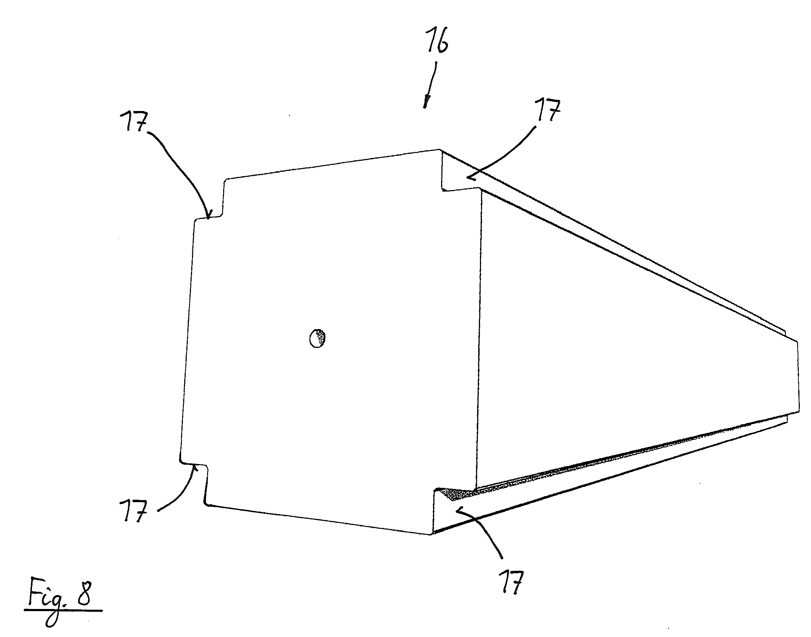

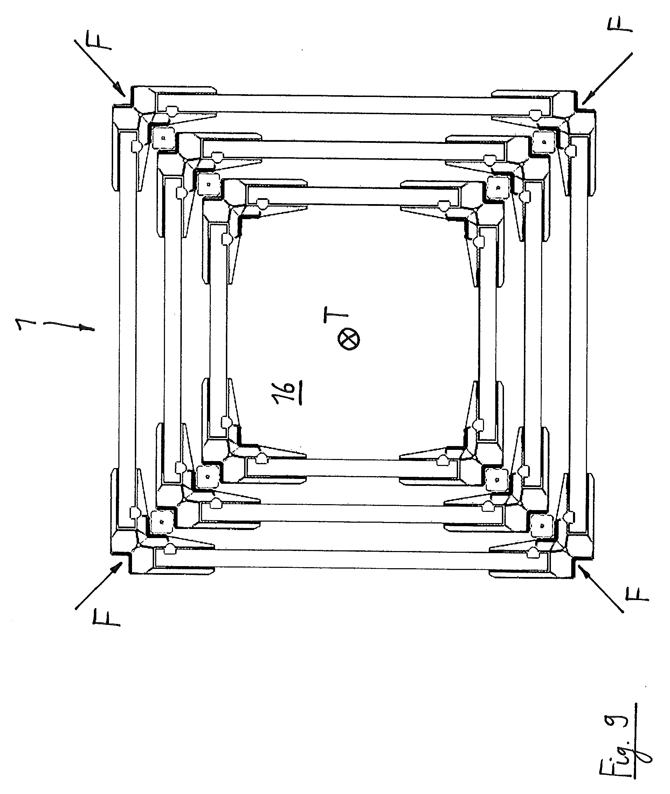

Das Montageverfahren der Teleskopführung 1 ist in den Figuren 8 und 9 illustriert. Ein hierbei zum Einsatz kommendes Werkzeug ist eine Masterschiene 16, die in Fig. 8 dargestellt ist. Die Masterschiene 16 ist präzise gearbeitet und weist einen Querschnitt auf, der dem zu erzeugenden Querschnitt des innersten Rohrelements 2 entspricht. Anlageflächen 17 sind in den vier Eckbereichen der Masterschiene 16 eingeschliffen, um eine definierte Anlage für die vier Eckverbindungselemente 9 zu definierten, die das innere Rohrelement 2 bilden.

Wie in Fig. 9 zu sehen ist, werden nun nach und nach um die Masterschiene 16 herum die vier Rohrelemente 2, 3 und dann 4 aufgebaut. Es werden zunächst die vier Eckverbindungselemente 9 mit den Plattenelementen 6 montiert und verklebt, so dass das innere Rohrelement 2 gebildet wird, und dann in den vier Eckbereichen die vier Linearlagerelemente 5 platziert.

Dann schließt sich wie eine äußere Schale das Rohrelement 3 mit seinen vier weiteren Eckverbindungselementen 9 und den Plattenelementen 7 an, die gleichermaßen miteinander verklebt werden.

Schließlich folgt - quasi als äußere Schale - das äußere Rohrelement 4 mit seinen vier Eckverbindungselementen 9 und den Plattenelementen 8, wobei wiederum Klebstoff zwischen die Eckverbindungselemente 9 und die Plattenelemente 8 eingebracht ist.

Bis der Klebstoff ausgehärtet ist, wird die so entstandene Struktur mit einer Andruckkraft F beaufschlagt. Dies hat die vorteilhafte Folge, dass alle Toleranzen der Bauteile ausgeglichen werden und so eine weitgehend spielfreie und gegebenenfalls auch vorgespannte Teleskopführung 1 entsteht.

Es wird bevorzugt ein Klebstoff verwendet, der zwischen 20 und 60 Minuten Aushärtezeit hat. Dies ermöglicht eine hinreichende Montagezeit für die einzelnen Bauteile. Bis zur vollständigen Aushärtung des Klebstoffs können 1 bis 12 Stunden vergehen.

Bis der Klebstoff ausgehärtet ist, verteilt sich der Druck infolge der Andruckkraft F gleichmäßig und führt zu dem angestrebten spielfreien Verbund der im Ausführungsbeispiel drei Rohrelemente.

Nach dem vollständigen Aushärten des Klebstoffs wird die Masterschiene 16 demontiert. Dann können die Kreuzrollenkäfige in die richtige Position bezüglich des gewünschten Hubs und der gewünschten Funktion bewegt werden.

Als Bauteile werden weitgehend Standardkomponenten verwendet, so dass eine kostengünstige Realisierung gewährleistet ist.

Die Stahlprofilschiene 13 ist beispielsweise ein Standardbauteil, z. B. ein gehärteter Stahlwinkel der Dimension 7 mm x 7 mm mit 1 mm Wandstärke. Für die Eckverbindungselemente 9 können ebenfalls genormte gezogene Aluminiumprofile herangezogen werden, die nur auf die benötigte Länge abgelängt werden müssen. Die Plattenelemente 6, 7, 8 sind Metallplatten, die nur zugeschnitten werden müssen.

Typische Anwendungsbereiche für die beschriebenen Teleskopführungen sind beispielsweise Operations- und Untersuchungstische und -stühle oder Röntgen-Deckenstative im medizinischen Bereich sowie natürlich vielfältige andere Anwendungen.

### Bezugszeichenliste

- 1: Teleskopführung
- 2: Rohrelement
- 3: Rohrelement
- 4: Rohrelement
- 5: Linearlagerelement
- 6: Plattenelement
- 7: Plattenelement
- 8: Plattenelement
- 9: Eckverbindungselement
- 10: schlitzförmige Aufnahme
- 11: schlitzförmige Aufnahme
- 12: Wälzkörper
- 13: Stahlprofilschiene
- 14': Ausformung im Eckverbindungselement
- 14": Ausformung im Eckverbindungselement
- 15': Vorsprung
- 15": Vorsprung
- 16: Masterschiene
- 17: Anlagefläche

- 18: Rille
- 19: Längsnut

- T: translatorische Verschieberichtung
- F: Andruckkraft

## Patentansprüche

1. Teleskopführung (1), umfassend mindestens zwei im Querschnitt quadratisch oder rechteckig ausgebildete und teleskopartig zusammenwirkende Rohrelemente (2, 3, 4), die relativ zueinander in eine translatorische Verschieberichtung (T) verschieblich angeordnet sind, wobei zwischen den Rohrelementen (2, 3, 4) Linearlagerelemente (5) angeordnet sind, wobei jedes Rohrelement (2, 3, 4) aus vier Plattenelementen (6, 7, 8) besteht, die an ihren zusammenstoßenden Eckbereichen mittels je eines Eckverbindungselements (9) verbunden sind,
**dadurch gekennzeichnet, dass**
die Verbindung zwischen den Plattenelementen (6, 7, 8) und den Eckverbindungselementen (9) eine stoffschlüssige Verbindung ist,
wobei die Linearlagerelemente (5) Wälzkörper (12) umfassen, die als Kreuzrollenkäfige oder Kugelkäfige ausgebildet sind,
wobei zwischen den Wälzkörpern (12) und den Eckverbindungselementen (9) eine Stahlprofilschiene (13) angeordnet ist, die eine Anlauffläche für die Wälzkörper (12) bildet und die L-förmig ausgebildet ist und in einer kongruenten Ausformung (14', 14") des Eckverbindungselements (9) angeordnet ist, wobei das Eckverbindungselement (9) eine außenliegende und eine innenliegende Ausformung (14', 14") für je eine Stahlprofilschiene (13) aufweist und wobei das Eckverbindungselement (9) im Bereich der Ausformung (14', 14") Vorsprünge (15', 15") zur Halterung der Stahlprofilschiene (13) aufweist.

2. Teleskopführung nach Anspruch 1, **dadurch gekennzeichnet, dass** die Plattenelemente (6, 7, 8) mit den Eckverbindungselementen (9) verklebt sind.

3. Teleskopführung nach Anspruch 1 oder 2, **dadurch gekennzeichnet, dass** die Eckverbindungselemente (9) zwei schlitzförmige Aufnahmen (10, 11) für die Aufnahme der seitlichen Endbereiche zweier Plattenelemente (6, 7, 8) aufweisen.

4. Teleskopführung nach einem der Ansprüche 1 bis 3, **dadurch gekennzeichnet, dass** die Eckverbindungselementen (9) aus einem abgelängten Profilteil bestehen, insbesondere aus einem gezogenen Metallprofil.

5. Verfahren zur Montage einer Teleskopführung (1) nach einem der Ansprüche 1 bis 4, die mindestens zwei im Querschnitt quadratisch oder rechteckig ausgebildete und teleskopartig zusammenwirkende Rohrelemente (2, 3, 4) umfasst, die relativ zueinander in eine translatorische Verschieberichtung (T) verschieblich angeordnet sind, wobei zwischen den Rohrelementen (2, 3, 4) Linearlagerelemente (5) angeordnet sind,
**dadurch gekennzeichnet, dass**
das Verfahren die Schritte aufweist:
a) Bereitstellen einer zentral angeordneten im Querschnitt quadratischen oder rechteckförmigen Masterschiene (16), die sich in Verschieberichtung (T) erstreckt und in ihren vier Eckbereichen Anlageflächen (17) für je ein Eckverbindungselement (9) aufweist;
b) Ansetzen von vier Eckverbindungselementen (9) an den Anlageflächen (17) der Masterschiene (16), wobei jedes Eckverbindungselement (9) mit zwei Plattenelementen (6, 7, 8) verbunden wird, indem die Plattenelemente (6, 7, 8) in je eine schlitzförmige Aufnahme (10, 11) des Eckverbindungselements (9) eingesteckt werden, wobei ein Klebstoff in den Bereich zwischen das Eckverbindungselement (9) und das Plattenelement (6, 7, 8) eingebracht wird;
c) Ansetzen von vier Linearlagerelementen (5) an die Außenseite der vier Eckverbindungselemente (9);
d) Ansetzen weiterer vier Eckverbindungselemente (9) an die vier Linearlagerelemente (5), wobei jedes Eckverbindungselement (9) mit zwei Plattenelementen (6, 7, 8) verbunden wird, indem die Plattenelemente (6, 7, 8) in je eine schlitzförmige Aufnahme (10, 11) des Eckverbindungselements (9) eingesteckt werden, wobei ein Klebstoff in den Bereich zwischen das Eckverbindungselement (9) und das Plattenelement (6, 7, 8) eingebracht wird;
e) Aushärtenlassen des Klebstoffs, wobei während des Aushärtens auf die außenliegenden Eckverbindungselemente (9) eine zum Zentrum der Masterschiene (16) hin gerichtete Andruckkraft (F) aufrecht erhalten wird.

## Claims

1. Telescopic guide (1), comprising at least two tubular elements (2, 3, 4) which are configured with a square or rectangular cross section, interact in a telescopic manner, and are arranged such that they can be displaced relative to one another in a translational displacement direction (T), linear bearing elements (5) being arranged between the tubular elements (2, 3, 4), each tubular element (2, 3, 4) consisting of four plate elements (6, 7, 8) which are connected at their abutting corner regions by means of in each case one corner connecting element (9), **characterized in that** the connection between the plate elements (6, 7, 8) and the corner connecting elements (9) is an integrally joined connection, the linear bearing elements (5) comprising rolling bodies (12) which are configured as cross-roller cages or ball cages, a steel profile rail (13) being arranged between the rolling bodies (12) and the corner connecting elements (9), which steel profile rail (13) forms a run-on surface for the rolling bodies (12), is of L-shaped configuration and is arranged in a congruent shaped-out portion (14', 14'') of the corner connecting element (9), the corner connecting element (9) having an outer and an inner shaped-out portion (14', 14") for in each case one steel profile rail (13), and the corner connecting element (9) having projections (15', 15") for securing the steel profile rail (13) in the region of the shaped-out portion (14', 14").

2. Telescopic guide according to Claim 1, **characterized in that** the plate elements (6, 7, 8) are adhesively bonded to the corner connecting elements (9).

3. Telescopic guide according to Claim 1 or 2, **characterized in that** the corner connecting elements (9) have two slot-shaped receptacles (10, 11) for receiving the lateral end regions of two plate elements (6, 7, 8).

4. Telescopic guide according to one of Claims 1 to 3, **characterized in that** the corner connecting elements (9) consist of a profile part which is cut to length, in particular of a drawn metal profile.

5. Method for assembling a telescopic guide (1) according to one of Claims 1 to 4, which telescopic guide (1) comprises at least two tubular elements (2, 3, 4) which are configured with a square or rectangular cross section, interact in a telescopic manner, and are arranged such that they can be displaced relative to one another in a translational displacement direction (T), linear bearing elements (5) being arranged between the tubular elements (2, 3, 4), **characterized in that** the method has the following steps:
a) providing of a centrally arranged master rail (16) which is of square or rectangular cross section, extends in the displacement direction (T) and has bearing faces (17) for in each case one corner connecting element (9) in its four corner regions;
b) setting of four corner connecting elements (9) on the bearing faces (17) of the master rail (16), each corner connecting element (9) being connected to two plate elements (6, 7, 8), by the plate elements (6, 7, 8) being plugged into in each case one slot-shaped receptacle (10, 11) of the corner connecting element (9), an adhesive being introduced into the region between the corner connecting element (9) and the plate element (6, 7, 8);
c) setting of four linear bearing elements (5) onto the outer side of the four corner connecting elements (9);
d) setting of a further four corner connecting elements (9) onto the four linear bearing elements (5), each corner connecting element (9) being connected to two plate elements (6, 7, 8), by the plate elements (6, 7, 8) being plugged into in each case one slot-shaped receptacle (10, 11) of the corner connecting element (9), an adhesive being introduced into the region between the corner connecting element (9) and the plate element (6, 7, 8);
e) allowing the adhesive to cure, a pressing force (F) which is directed towards the centre of the master rail (16) being maintained on the outer corner connecting elements (9) during the curing.

## Revendications

1. Glissière télescopique (1), comprenant au moins deux éléments tubulaires (2,3,4) conçus avec une section transversale carrée ou rectangulaire et coopérant de manière télescopique, qui sont disposés de manière déplaçable l'un par rapport à l'autre dans une direction de déplacement (T) par translation, dans laquelle entre les éléments tubulaires (2,3,4) sont disposés des éléments de palier linéaire (5), dans laquelle chaque élément tubulaire (2,3,4) est constitué de quatre éléments de plaque (6,7,8), qui sont reliés au niveau de leurs zones de coin en butée au moyen d'un élément de raccord d'angle (9) respectif,
**caractérisée en ce que**
la liaison entre les éléments de plaque (6,7,8) et les éléments de raccord d'angle (9) est une liaison par conjonction de matière,
dans laquelle les éléments de palier linéaire (5) comprennent des corps de roulement (12), qui sont conçus comme des cages à roulements croisés ou des cages à billes,
dans laquelle entre les corps de roulement (12) et les éléments de raccord d'angle (9) est disposé un rail profilé en acier (13), qui forme une surface de roulement pour les corps de roulement (12) et est conçu en forme de L et disposé dans un façonnage congruent (14',14'') de l'élément de raccord d'angle (9), dans laquelle l'élément de raccord d'angle (9) présente un façonnage situé à l'extérieur et situé à l'intérieur (14',14") pour respectivement un rail profilé en acier (13) et dans laquelle l'élément de raccord d'angle (9) présente des protubérances (15',15") dans la zone du façonnage (14',14'') pour retenir les rails profilés en acier (13).

2. Glissière télescopique selon la revendication 1, **caractérisée en ce que** les éléments de plaque (6,7,8) sont collés avec les éléments de raccord d'angle (9).

3. Glissière télescopique selon la revendication 1 ou 2, **caractérisée en ce que** les éléments de raccord d'angle (9) présentent deux réceptacles en forme de fente (10,11) pour recevoir les zones d'extrémité latérales de deux éléments de plaque (6,7,8).

4. Glissière télescopique selon une des revendications 1 à 3, **caractérisée en ce que** les éléments de raccord d'angle (9) sont constitués d'une partie de profilé mise à longueur, notamment d'un profilé en métal étiré.

5. Procédé de montage d'une glissière télescopique (1) selon une des revendications 1 à 4, qui comprend au moins deux éléments tubulaires (2,3,4) conçus avec une section transversale carrée ou rectangulaire et coopérant de manière télescopique (2,3,4), qui sont disposés de manière déplaçable l'un par rapport à l'autre dans un mouvement de déplacement (T) par translation, dans lequel entre les éléments tubulaires (2,3,4) sont disposés des éléments de palier linéaire (5),
**caractérisé en ce que**
le procédé présente les étapes consistant à :
a) fournir un rail maître (16) disposé au centre, à section transversale de forme carrée ou rectangulaire, qui s'étend dans la direction de déplacement (T) et présente dans ses quatre zones de coin des surfaces de positionnement (17) pour respectivement un élément de raccord d'angle (9) ;
b) poser quatre éléments de raccord d'angle (9) sur les surfaces de positionnement (17) du rail maître (16), chaque élément de raccord d'angle (9) étant relié avec deux éléments de plaque (6,7,8), en insérant les éléments de plaque (6,7,8) dans respectivement un réceptacle en forme de fente (10,11) de l'élément de raccord d'angle (9), un adhésif étant appliqué dans la zone entre l'élément de raccord d'angle (9) et l'élément de plaque (6,7,8) ;
c) poser quatre éléments de palier linéaire (5) sur le côté extérieur des quatre éléments de raccord d'angle (9) ;
d) poser quatre éléments de raccord d'angle (9) supplémentaires sur les quatre éléments de palier linéaire (5), chaque élément de raccord d'angle (9) étant relié avec deux éléments de plaque (6,7,8), en insérant les éléments de plaque (6,7,8) dans respectivement un réceptacle en forme de fente (10,11) de l'élément de raccord d'angle (9), un adhésif étant appliqué dans la zone entre l'élément de raccord d'angle (9) et l'élément de plaque (6,7,8) ;
e) laisser durcir l'adhésif, pendant le durcissement, une force de pression (F) s'exerçant dans la direction du centre du rail maître (16) étant maintenue sur les éléments de raccord d'angle (9) situés à l'extérieur.
